# EUROPÄISCHE PATENTSCHRIFT

(11) **EP 3 329 132 B1**
(45) Veröffentlichungstag und Bekanntmachung des Hinweises auf die Patenterteilung: **15.12.2021**
(21) Anmeldenummer: 16748094.6
(22) Anmeldetag: 28.07.2016
(51) Int. Cl.: A44B 17/00, F16B 5/06, F16B 21/08

(54) **ZWEITEILIGE STECKKUPPLUNG ZUR VERBINDUNG VON BAUTEILEN**
TWO-PART PLUG-IN COUPLING FOR CONNECTING COMPONENTS
ACCOUPLEMENT EMBOÎTABLE EN DEUX PARTIES SERVANT À L'ASSEMBLAGE DE PIÈCES

(30) Priorität: 25.08.2015 DE 202015005870 U
(43) Veröffentlichungstag der Anmeldung: 06.06.2018
(73) Patentinhaber: Böllhoff Verbindungstechnik GmbH, 33649 Bielefeld (DE)
(72) Erfinder: FRITZSCH, Jasmin, 33824 Werther (DE); KAHRE, Michael, 32052 Herford (DE)
(74) Vertreter: HWP Intellectual Property
(86) Internationale Anmeldenummer: PCT/EP2016/068113
(87) Internationale Veröffentlichungsnummer: WO 2017/032545

(56) Entgegenhaltungen:
- WO-A1-2011/068769
- WO-A1-2013/159977
- DE-U1- 20 107 949
- DE-U1-202006 015 982
- US-A- 3 611 861
- US-A1- 2011 296 764

## Beschreibung

### 1. Gebiet der Erfindung

Die vorliegende Erfindung betrifft eine zweiteilige Steckkupplung bestehend aus einem männlichen und einem weiblichen Kupplungselement. Des Weiteren betrifft vorliegende Erfindung ein Verbindungsverfahren von einem ersten und einem zweiten Bauteil mit Hilfe dieser Steckkupplung sowie ein Herstellungsverfahren für ein weibliches Kupplungselement.

### 2. Hintergrund der Erfindung

Im Stand der Technik sind verschiedene Arten und Konstruktionen von Steckkupplungen bekannt, mit denen ein erstes und ein zweites Bauteil verbunden werden können. Denn mithilfe der Konstruktion der Steckkupplung wird eine individuelle Anpassung auf die miteinander zu verbindenden Bauteile vorgenommen.

So offenbart beispielsweise US 8,403,356 eine Steckkupplung zur Befestigung einer inneren Verkleidungsstruktur im Kraftfahrzeug, die aus mindestens drei Teilen besteht. Ein zwischengeordnetes Teil wird beispielsweise zur Realisierung des Abstands zwischen den beiden miteinander zu verbindenden Bauteilen genutzt. Des Weiteren wird ein männliches Kupplungselement eingesetzt, das ähnlich einem Nagel einen großflächigen Kopf aufweist. Dieses männliche Kupplungselement ist allein nicht in der Lage, sich in einer Bauteilöffnung zu halten. Erst die Kombination mit einem aufgesteckten und darauf verrasteten weiblichen Kupplungselement stellt den Halt in einer Bauteilöffnung und die Möglichkeit der Verbindung mit einem weiteren Bauteil sicher. Entsprechend ist eine Vorinstallation der einzelnen Kupplungselemente in den jeweiligen Bauteilen nicht möglich, vielmehr muss gemeinsam mit der Installation der Kupplungselemente an dem jeweiligen Bauteil auch das Zusammensetzen der Kupplungselemente und Bauteile erfolgen.

Des Weiteren beschreibt DE 197 21 314 A1 eine zwei- oder mehrteilige Steckkupplung, die beispielsweise auch einen Bolzen mit Kugelkopf, also ein männliches Kupplungselement in Kombination mit einer Kugelpfanne in einem weiblichen Kupplungselement verwendet. Das weibliche Kupplungselement umfasst als Kopf ein paar scheibenförmige Elemente, die einander gegenüberliegend zwischen sich einen Spalt bilden. Dieser Spalt dient der Aufnahme bzw. dem Einsetzen der Kupplung in einem Randschlitz eines Bauteils. Somit werden die Ränder des Randschlitzes schienenähnlich in den beiden scheibenförmigen Elementen geführt. Daraus folgt eine Positionsvorgabe der Kupplung im Randbereich eines Bauteils. Eine Installation dieser Kupplung in einer beliebig platzierten Bauteilöffnung ist daher nicht möglich. Das gegenüberliegende männliche Kupplungsteil wird beispielsweise in einer Bauteilöffnung verrastet, oder m dieser eingeklebt, um dann die Steckkupplung zu verbinden.

Eine ähnliche Befestigung eines weiblichen Kupplungselements zeigt FR 2 932 235. Hier wird ebenfalls eine elastisch ausgebildete Kugelpfanne bereitgestellt, die eine ringförmige Befestigungsnut zur Befestigung beispielsweise an einem Bildschirm aufweist. Diese Befestigungsnut lässt sich in seitliche Schlitze des Bauteils einschieben, wobei nach Installation des weiblichen Kupplungselements das Kupplungselement weit über die Bauteilebene hinaus ragt. Da die Kugelpfanne über die Bauteiloberfläche hinaus ragt, kann sich die Kugelpfanne mit dem darin installierten Kugelkopf verformen und Schwingungen dämpfen. Diese Schwingungsdämpfung wird gleichzeitig durch zusätzliche Aussparungen parallel zum Hohlraum gewährleistet, indem das männliche Kupplungselement eingesetzt ist.

Eine zwar nur entfernte aber dennoch simple Konstruktion einer Steckkupplung offenbart GB 1 332 397 auf dem Gebiet der Druckknöpfe. Sowohl männliches wie auch weibliches Kupplungselement weisen einen flächigen Kopf auf, sodass der Kugelkopf des männlichen Kupplungselements und die Kugelpfanne des weiblichen Kupplungselements durch diesen abgedeckt sind. Um die Kupplungselemente in entsprechenden Stoffabschnitten befestigen zu können, werden Federringe auf zylindrische Bereiche der Kupplungselemente aufgeschoben. Insofern stellen diese Kupplungselemente nicht durch ihre eigene integrale Struktur Befestigungsmöglichkeiten mit den ihnen zugeordneten Bauteilen bzw. Stoffteilen zur Verfügung. Die Verbindung der beiden Kupplungselemente erfolgt auch hier über eine Rastverbindung zwischen dem männlichen und dem weiblichen Kupplungselement.

Eine weitere zweitteilige Steckkupplung offenbart DE 201 07 949 U1. Ein weibliches Kupplungselement bestehend aus einem elastischen Material wird in eine Installationsrichtung in eine Bauteilöffnung eingesetzt. Zur Unterstützung der Installation weist das weibliche Kupplungselement eine konische Form auf, die sich in Installationsrichtung verjüngt. Um den Halt des weiblichen Kupplungselements zu unterstützen und das weibliche Kupplungselement nicht über die Bauteilöffnung hinauszudrücken, begrenzt ein sich senkrecht zur Installationsrichtung erstreckender Flansch die Einsetzbewegung in Installationsrichtung. Innerhalb des weiblichen Kupplungselements ist eine Kugelpfanne vorgesehen, in der ein männliches Kupplungselement, im Speziellen ein Bolzen mit Kugelkopf, verriegelbar ist. Um eine Verbindung zwischen zwei Bauteilen herzustellen, wird der Bolzen mit Kugelkopf ebenfalls in Installationsrichtung in dem weiblichen Kupplungselement verrastet. Somit unterstützt die Einsetzbewegung des Bolzens mit Kugelkopf in die Kugelpfanne neben der Herstellung der Verbindung zwischen den Bauteilen auch die Installation und den testen Sitz des weiblichen Kupplungselements in der Bauteilöftnung. Aber auch hier steht das weibliche Kupplungselement über die Bauteiloberfläche hinaus. Dies ermöglicht eine gewisse Beweglichkeit des Kugelkopfes des männlichen Kupplungselements nach erfolgter Installation, da sich der Kugelkopf gemeinsam mit dem größten Teil des weiblichen Kupplungselements oberhalb der Bauteiloberfläche elastisch bewegbar und auslenkbar befindet. Aufgrund der gleichgerichteten Installationsrichtung des weiblichen Kupplungselementsund und der Herstellung der Verbindung zwischen dem weiblichen und dem männlichen Kupplungselement werden die zwei Bauteile bei zweiseitiger Zugänglichkeit miteinander verbunden.

Die DE 20 2006 015982 U1 und US 3 611 861 A offenbaren weibliche bzw. männliche Kupplungselemente, welche mittels Raststegen in einem Bauteil fixiert werden.

Die oben beschriebenen Kupplungskonstruktionen sind gerade in ihrer Außenansicht ästhetisch anspruchslos und stören häufig das Erscheinungsbild der miteinander verbundenen zwei Bauteile.

Des Weiteren ergibt sich ein Nachteil daraus, dass zur Herstellung der Verbindung zwischen den zwei Bauteilen diese Bauteile von beiden Seiten zugänglich sein müssen. Andernfalls wäre es nur unter Schwierigkeiten möglich, die Kupplungselemente der Steckkupplung in den beiden Bauteilen zu installieren und die Verbindung herzustellen.

Es ist daher die Aufgabe der vorliegenden Erfindung, eine ästhetisch anspruchsvolle Steckkupplung bereitzustellen, die gleichzeitig die Herstellung einer Verbindung zwischen zwei Bauteilen erleichtert.

### 3. Zusammenfassung der Erfindung

Die obige Aufgabe wird durch Kupplungselemente gemäß Schutzansprüchen 1 und 2 , durch eine zweiteilige Steckkupplung gemäß Schutzanspruch 10 sowie durch eine Verbindung zwischen einem ersten und einem zweiten Bauteil über die zweiteilige Steckkupplung gemäß Schutzanspruch 11 gelöst. Vorteilhafte Ausgestaltungen und Weiterentwicklungen vorliegender Erfindung ergeben sich aus der folgenden Beschreibung, den Zeichnungen sowie den anhängenden Schutzansprüchen.

Vorliegende Erfindung umfasst eine zweiteilige Steckkupplung, die ein männliches Bolzenelement mit einem Verrastungskopf, insbesondere ein Bolzen mit Kugelkopf, und ein weibliches Kupplungselement oder die ein weibliches Aufnahmeelement und ein männliches Kupplungselement oder die ein weibliches Kupplungselement und ein männliches Kupplungselement aufweist, wobei das männliche und weibliche Kupplungselement jeweils in einer Bauteilöffnung angeordnet sind. Das Kupplungselement umfasst die folgenden Merkmale: einen flächigen Kopfabschnitt, von dem sich senkrecht in einer Installationsrichtung des Kupplungselements eine weibliche hohlzylinderähnliche Verbindungsstruktur erstreckt, die an einer radialen Innenseite einen radial einwärts ragenden verriegelungssteg umfasst, sodass ein männliches Bolzenelement, insbesondere ein Kugelbolzen, in die hohlzylinderähnliche Verbindungsstruktur entgegen der Installationsrichtung einführbar und dort verrieglbar ist, oder eine männliche zylinderähnliche Verbindungsstruktur erstreckt, die einen sich axial erstreckenden Bolzen mit einem Verrastungskopf umfasst, so dass die männliche zylinderähnliche Verbindungsstruktur in ein weibliches Aufnahmeelement einführbar ist und dort verriegelbar ist, wobei das Kupplungselement an einer radialen Außenseite eine integrale Verriegelungsstruktur mit einem umlaufenden oder einer Mehrzahl von gleichmäßig angeordneten auswärts ragenden federnden Raststegen aufweist, die mit dem Kopfabschnitt einen Installationsspalt zur Aufnahme des Bauteils bilden, sodass das weibliche oder männliche Kupplungselement in der Öffnung des Bauteils mit einer Relativbewegung zwischen Kupplungsteil und Bauteil in Installationsrichtung einrastbar ist, während der umlaufende oder die Mehrzahl von Raststegen einen inneren Hohlraum aufweisen, sodass die Raststege radial einwärts verformbar sind und eine Mehrzahl von Radialstegen an einer Unterseite des Kopfabschnitts vorgesehen ist, die sich parallel zu einer Längsachse des Kupplungselements erstrecken.

Das oben genannte Kupplungselement ist gemäß unterschiedlicher Ausführungsformen der Erfindung männlicher oder weiblicher Struktur. Es ist durch den flächigen Kopfabschnitt in einer nahezu fluchtenden Anordnung bezogen auf die Bauteiloberfläche in dem Bauteil installierbar. Das bedeutet, dass eine Bauteilöffnung, in der das weibliche oder männliche Kupplungselement installiert wird, im Wesentlichen durch den flächigen Kopfabschnitt abgedeckt wird. Diese Konstruktion eröffnet die Möglichkeit, dass der flächige Kopfabschnitt nur geringfügig über die Bauteiloberfläche hinausragt und diese dadurch in ihrer ästhetischen Erscheinung nicht negativ beeinflusst. Zudem ergibt sich die bevorzugte Möglichkeit, den flächigen Kopfabschnitt zu gestalten, sodass dieser ästhetische Gestaltungselemente in die hergestellte Verbindung einbringt. Derartige Gestaltungen umfassen beispielsweise eine flächige, farbliche, strukturelle oder haptische Gestaltung des Kopfabschnitts, der dem zu installierenden männlichen Kupplungselement abgewandt ist. Des Weiteren ist es bevorzugt, den Kopfabschnitt funktionell als Öse, Haken, Verschlusselement oder dergleichen auszubilden. Zudem kann der Kopfabschnitt bevorzugt die Form einer Halbkugel, einer Kugel, eines Quaders, eines Kegels, einer Pyramide, eines Finnenlogos oder einer Figur aufweisen.

Die Verbindung zwischen dem weiblichen Kupplungselement und einem männlichen Bolzenelement oder Kupplungselement wird über die hohlzylinderähnliche Verbindungsstruktur hergestellt. Diese hohlzylinderähnliche Verbindungsstruktur ist bevorzugt unterhalb des Kopfabschnitts angeordnet, sodass diese auch nicht aus der Bauteiloberfläche heraus ragt. Diese hohlzylinderähnliche Verbindungsstruktur weist eine radiale Innenseite auf, die der Verbindung mit dem männlichen Kupplungselement dient. Die radiale Innenseite weist vorzugsweise eine Kugelpfanne auf, in der sich der Kugelkopf eines Kugelbolzens oder ein Verrastungskopf des männlichen Bolzenelements oder des männlichen Kupplungselements abstützen kann. Des Weiteren ragt radial einwärts ein verriegelungssteg, sodass der Verrastungskopf bzw. der Kügelkopf innerhalb der hohlzylinderähnlichen Verbindungsstruktur verriegelbar ist.

In weiterer konstruktiver Ausgestaltung ist die radiale Außenseite der hohlzylinderähnlichen Verbindungsstruktur oder der zylinderähnlichen Verbindungsstruktur durch eine integral ausgebildete Verriegelungsstruktur gekennzeichnet. Diese integrale Verriegelungsstruktur dient der Befestigung des weiblichen Kupplungselements in der Öffnung des Bauteils. Da das weibliche Kupplungselement möglichst einfach in der Bauteilöffnung installiert werden soll, bildet die integrale Verriegelungsstruktur mithilfe eines umlaufenden oder einer Mehrzahl von gleichmäßig angeordneten auswärts ragenden federnden Raststegen eine Raststruktur, sodass durch ein Drücken des weiblichen Kupplungselements in die Bauteilöffnung in Installationsrichtung sich diese Raststege am Rand der Bauteilöffnung verriegeln. Daher bilden der umlaufene Raststeg oder die Mehrzahl von Raststegen mit der der hohlzylinderähnlichen Verbindungsstruktur zugewandten Unterseite des Kopfabschnitts den Installationsspalt, in dem der Rand der Bauteilöffnung des Bauteils aufgenommen wird. Sobald das weibliche Kupplungselement in der Bauteilöffnung verriegelt ist, bilden der Kopfabschnitt in die eine Richtung und die Raststege in die andere Richtung einen Hinterschnitt gegen das Herauslösen des weiblichen Kupplungselements aus der Bauteilöffnung. Daher bewirkt das Einsetzen des männlichen Bolzenelements oder Kupplungselements in das Innere der hohlzylinderähnlichen Verbindungsstruktur entgegen der Installationsrichtung auch nicht ein Lösen des weiblichen Kupplungselements aus der Bauteilöffnung.

Das männliche Kupplungselement weist die gleichen Eigenschaften auf wie das weibliche Kupplungselement, um das männliche Kupplungselement in der Öffnung eines Bauteils zu befestigen. Daher gelten alle Informationen, die im Hinblick auf das weibliche Kupplungselement präsentiert werden in gleicher Weise auch für das männliche Kupplungselement. Das männliche Kupplungselement unterscheidet sich im Vergleich zum weiblichen Kupplungselement lediglich im Hinblick auf die Verbindungsstruktur, die gesehen in Installationsrichtung unterhalb des Kopfabschnitts angeordnet ist. Diese männliche Verbindungsstruktur ist im Gegensatz zur weiblichen hohlzylinderähnlichen Verbindungsstruktur zylinderähnlich aufgebaut. Das bedeutet, dass sie im radialen Inneren ausgefüllt ist. Daher kann die männliche zylinderähnliche Verbindungsstruktur auch einen sich axial erstreckenden Bolzen mit einem Verrastungskopf bilden. Dieser Verrastungskopf, vorzugsweise ein Kugelkopf, ist angepasst, um in einem weiblichen Aufnahmeelement einer bekannten Steckkupplung, wie sie allgemein aus dem diskutierten Stand der Technik bekannt ist, aufgenommen zu werden.

Es ist von Vorteil, dass das Kupplungselement, sei es männlich oder weiblich, auch bei nur einseitige Zugänglichkeit der Bauteilöffnung des Bauteils installierbar ist. Denn das Einstecken des Kupplungselements in die Bauteilöffnung und das selbstständige Verrasten der Raststege ist ausreichend, um das Kupplungselement in der Bauteilöffnung verlässlich zu halten.

Gemäß einer bevorzugten Ausführungsform des Kupplungselements definieren der umlaufende oder die Mehrzahl von Raststegen gegenüber dem Kopfabschnitt verlaufende Halteflächen, die den Installationsspalt begrenzen. Genau diese Halteflächen bilden den bereits oben erwähnten Hinterschnitt gegen eine Kraftwirkung entgegen der Installationsrichtung, sodass sich das Kupplungselement nicht aus der Bauteilöffnung lösen lässt.

Gemäß einer weiteren bevorzugten Ausführungsform vorliegender Erfindung weisen der umlaufende oder die Mehrzahl von Raststegen in Installationsrichtung geneigt angeordnete Einlaufschrägen auf, sodass sich der bzw. die Raststege in Installationsrichtung verjüngen. Erfinderisch ist, dass der umlaufende oder die Mehrzahl von Raststegen mindestens einen inneren Hohlraum aufweisen, sodass die Raststege radial einwärts verformbar sind.

Basierend auf der oben beschriebenen speziellen Konstruktion der Raststege stützen sich während des Installationsvorgangs die Einlaufschrägen an den Rändern der Bauteilöffnung ab. Damit das Kupplungselement fest in der Bauteilöffnung installiert werden kann, müssen während der Installation die Raststege zunächst radial einwärts gedrückt werden, um nach Anordnung des Bauteils im Installationsspalt in ihre Ausgangsposition aufgrund ihrer elastischen Materialgestaltung wieder zurückkehren zu können. Diese gezielte Verformung der Raststege wird einerseits durch die Materialgestaltung des Kupplungselements gewährleistet. Das Kupplungselement besteht bevorzugt aus elastomerem Kunststoff, der die gewünschten elastischen und federnden Eigenschaften bereitstellt. Des Weiteren gewährleisten die Einlaufschrägen überhaupt einen ausreichenden Angriff der Ränder der Bauteilöffnung, über die die Raststege radial einwärts gedrückt werden. Da zudem die Raststege gemäß der Erfindung mindestens einen inneren Hohlraum aufweisen, sind die durch die

Ränder der Bauteilöffnung aufgebrachten mechanischen Belastungen ausreichend groß, um die Raststege radial einwärts zu verformen. Diese Verformung stellt aber neben der Installation des Kupplungselements in der Bauteilöffnung gleichzeitig auch die verlässliche Verriegelung des weiblichen und des männlichen Kupplungselements in der Bauteilöffnung sicher. In Abhängigkeit von der Größe des Hohlraums oder der Anzahl der Hohlräume innerhalb eines Raststegs ist einstellbar, wie das Verformungsverhalten eines einzelnen Raststegs bei mechanischer Belastung durch den Rand der Bauteilöffnung ist. Dabei können auch die durch die beiden miteinander verbundenen Bauteile später aufgebrachten belastenden mechanischen Schwingungen auf die zweiteilige Steckkupplung berücksichtigt werden. Denn wenn diese Bauteilschwingungen eine starke mechanische Belastung für die zweiteilige Steckkupplung darstellen, dann werden entsprechend die Haltekräfte der Raststege über kleinere Hohlräume innerhalb der Raststege stärker eingestellt.

Gemäß einer weiteren bevorzugten Ausführungsform des Kupplungselements weist die Verbindungsstruktur in Anpassung an eine Form der Öffnung im Bauteil eine runde oder eine eckige Außenkontur auf. In Abhängigkeit von den miteinander zu verbindenden Bauteilen ist es bevorzugt, die Bauteilöffnung rund oder eckig auszuführen. Entsprechend ist es erforderlich, dass das Kupplungselement optimal in diese Bauteilöffnung passt. Zu diesem Zweck ist es wünschenswert, wenn die hohlzylinderähnliche Verbindungsstruktur in ihrer Form an die Bauteilöffnung angepasst ist, um vorhandene Freiräume zwischen der Bauteilöffnung und der hohlzylinderähnlichen Verbindungsstruktur zu minimieren, da dies einen festen Halt des Kupplungselements in der Bauteilöffnung unterstützt. Daher wird gemäß unterschiedlicher bevorzugter Ausführungsform die Außenkontur der hohlzylinderähnlichen Verbindungsstruktur bei einer runden Bauteilöffnung beispielsweise rund gestaltet und bei einer viereckigen Bauteilöffnung viereckig ausgeführt. Es wird vorzugsweise die Außenkontur der hohlzylinderähnlichen oder zylinderähnlichen Verbindungsstruktur in Anpassung an die Form der Bauteilöffnung ausgeführt und dimensioniert.

Gemäß einer weiteren bevorzugten Ausführungsform vorliegender Erfindung erstreckt sich der Kopfabschnitt in radialer Richtung bezogen auf eine axiale Längsachse des Kupplungselements über eine radiale oder laterale Ausdehnung des bzw. der Raststege hinaus. Auf diese Weise wird sichergestellt, dass bevorzugt der Kopfabschnitt die vollständige Bauteilöffnung abdeckt. Mit dieser Konstruktion werden sowohl ästhetische wie auch technische Vorteile erzielt. Technisch gesehen sorgt der Kopfabschnitt für eine zusätzliche Abdichtung der Bauteilöffnung nach außen. Damit wird beispielsweise vermieden, dass Flüssigkeiten oder Staub in die Bauteilöffnung eindringen kann. Ästhetisch sorgt diese bevorzugte Konstruktion für eine gleichmäßige Bauteiloberfläche mit dem weiblichen oder männlichen Kupplungselement. Denn die Bauteiloberfläche wird lediglich durch die sichtbaren Oberseiten des Kopfabschnitts beeinflusst. Da über diesen Kopfabschnitt Struktur, Farbgestaltung und Materialauswahl an das Bauteil anpassbar sind, sind die verschiedensten ästhetischen Gestaltungen mit Hilfe des flächigen Kopfabschnitts realisierbar.

In diesem Zusammenhang ist es daher ebenfalls erfindungsgemäß bevorzugt, dass der Kopfabschnitt eine geschlossene Fläche entgegengesetzt zur Installationsrichtung bereitstellt, die eine runde oder eine eckige Form aufweist. Gemäß einer weiteren bevorzugten Ausführungsform weist der Kopfabschnitt eine axiale Dicke angrenzend an den Installationsspalt und entgegengesetzt zur Installationsrichtung im Bereich von 5 bis 25 % einer axialen Gesamtlänge des Kupplungselements auf. Anhand dieser Dickengestaltung des Kopfabschnitts ist erkennbar, dass der Kopfabschnitt vorzugsweise nur geringfügig über die Oberfläche des Bauteils, in das das weibliche oder männliche Kupplungselement installiert ist, hinausragt. Dies unterstützt neben einer speziellen ästhetischen Gestaltung auch eine platzsparende Anordnung der Steckkupplung, da sich diese im Wesentlichen unterhalb des Bauteils mit Bauteilöffnung befindet.

Gemäß einer weiteren bevorzugten Ausführungsform vorliegender Erfindung ist die radiale Innenseite der weiblichen hohlzylinderähnlichen Verbindungsstruktur mit einer Kugelpfanne ausgestattet und der Verriegelungssteg verläuft durchgängig in Umfangsrichtung oder mit Durchbrüchen. Im Vergleich dazu ist die männliche zylinderähnliche Verbindungsstruktur bolzen- oder stegartig geformt. Sie weist am axial abgewandten Ende vom Kopfabschnitt eine Verdickung verglichen zum übrigen zylinderähnlichen Abschnitt auf. Die Verdickung, bevorzugt ein Kugelkopf oder ein Verrastungsabschnitt, ist angepasst, um in einer Kugelpfanne oder einer ähnlichen Konstruktion aufgenommen und verriegelt zu werden.

Zudem umfasst vorliegende Erfindung eine zweiteilige Steckkupplung, die ein männliches Bolzenelement mit einem Verrastungskopf, insbesondere einen Bolzen mit Kugelkopf, in Kombination mit einem weiblichen Kupplungselement mit einer weiblichen hohlzylinderähnlichen Verbindungsstruktur gemäß einer der oben beschriebenen Ausführungsformen aufweist oder die ein weibliches Aufnahmeelement in Kombination mit einem männlichen Kupplungselement mit einer männlichen zylinderähnlichen Verbindungsstruktur gemäß einer der vorhergehenden Ausführungsformen aufweist oder die ein weibliches Kupplungselement mit einer weiblichen hohlzylinderähnlichen Verbindungsstruktur gemäß einer der vorhergehenden Ausführungsformen in Kombination mit einem männlichen Kupplungselement mit einer männlichen zylinderähnlichen Verbindungsstruktur gemäß einer der vorhergehenden Ausführungsformen aufweist. Wie bereits oben erläutert worden ist, ist ein männliches und ein weibliches Kupplungselement jeweils in einer Bauteilöffnung des entsprechenden Bauteils angeordnet. Aus obiger Beschreibung folgt, dass das männliches Bolzenelement und das weibliche Aufnahmeelement auch durch ein männliches Kupplungselement und ein weibliches Kupplungselement gebildet werden können. In diesen Fällen ist auch in dem anderen Bauteil eine Bauteilöffnung vorgesehen, um das entsprechende Kupplungselement im Bauteilanzuordnen und zu befestigen.

Vorliegende Erfindung umfasst ebenfalls eine Verbindung zwischen einem ersten Bauteil und einem zweiten Bauteil über die zweiteilige Steckkupplung, in der das erste Bauteil mit einem männlichen Bolzenelement mit einem Verrastungskopf ausgestattet ist und das zweite Bauteil ein in einer Bauteiloffnung installiertes weibliches Kupplungselement gemäß einer der obigen Ausführungsformen aufweist oder in der das erste Bauteil mit einem weiblichen Aufnahmeelement ausgestattet ist und das zweite Bauteil ein in einer Bauteilöffnung installiertes männliches Kupplungselement gemäß einer der obigen Ausführungsformen aufweist oder in der das erste Bauteil ein in einer Bauteilöffnung installiertes weibliches Kupplungselement und das zweite Bauteil ein in einer Bauteilöffnung installiertes männliches Kupplungselement gemäß einer der obigen Ausführungsformen aufweist.

Vorliegende Erfindung umfasst zudem ein Verbindungsverfahren zwischen einem ersten Bauteil mit einem männlichen Bolzenelement mit einem Verrastungskopf oder mit einem weiblichen Aufnahmeelement und einem zweiten Bauteil mit einer Bauteilöffnung. Das Verbindungsverfahren weist die folgenden Schritte auf: Einstecken eines weiblichen oder männlichen Kupplungselements in die Bauteilöffnung des zweiten Bauteils in einer Installationsrichtung, sodass sich ein Kopfabschnitt des weiblichen oder männlichen Kupplungselements an einer Oberfläche des zweiten Bauteils abstützt und eine in Installationsrichtung hohlzylinderähnliche oder eine zylinderähnliche Verbindungsstruktur die Bauteilöffnung durchgreift, und Verrasten des weiblichen oder männlichen Kupplungselements über einen Installationsspalt einer integralen Verriegelungsstruktur des weiblichen oder männlichen Kupplungselements am zweiten Bauteil, wobei die Verriegelungsstruktur an einer radialen Außenseite der Verbindungsstruktur ausgebildet ist, Verriegeln des Verrastungskopfes des männlichen Bolzenelements an einem radial einwärts ragenden Verrastungssteg im Inneren der hohlzylinderähnlichen Verbindungsstruktur über eine Relativbewegung des männlichen Kupplungselements bezogen auf das weibliche Kupplungselement in einer Verbindungsrichtung entgegengesetzt zur Installationsrichtung oder Verriegeln eines weiblichen Aufnahmeelements an dem axial vorstehenden Verrastungskopf der zylinderähnlichen Verbindungsstruktur über eine Relativbewegung des Aufnahmeelements bezogen auf das männliche Kupplungselement in einer Verbindungsrichtung entgegengesetzt zu Installationsrichtung.

Vorzugsweise umfasst das erfindungsgemäße Verbindungsverfahren den weiteren Schritt: Anordnen eines männlichen Kupplungselements in einer Bauteilöffnung des ersten Bauteils als männliches Bolzenelement oder Anordnen eines weiblichen Kupplungselements in einer Bauteilöffnung des ersten Bauteils als weibliches Aufnahmeelement.

Erfindungsgemäß bevorzugt ist das Verbindungsverfahren durch die Schritte charakterisiert: radial einwärts gerichtetes Verformen von einem umlaufenden oder einer Mehrzahl von federnden Raststegen an einer radialen Außenseite der Verbindungsstruktur durch das zweite Bauteil und Aufnehmen eines Rands der Bauteilöffnung in einem Installationsspalt zwischen Raststeg und Kopfabscnnitt. Zudem zeichnet sich vorzugsweise das erfindungsgemäße Verbindungsverfahren dadurch aus, dass das weibliche oder männliche Kupplungselement allein über eine einseitige Zugänglichkeit am zweiten Bauteil befestigt und mit dem männlichen Bolzenelement oder dem weiblichen Aufnahmeelement verbunden werden kann. Dies wird dadurch realisiert, dass die hohlzylinderähnliche oder die zylinderähnliche Verbindungsstruktur eine aufeinander abgestimmte integrale Verriegelungsstruktur für die Bauteilöffnung und eine weitere Struktur zur Befestigung des männlichen Bolzenelements oder des weiblichen Aufnahmeelements aufweist. Da diese konstruktive Gestaltung nur einen einseitigen Angriff einer Installationskraft erforderlich macht, lassen sich die erfindungsgemäßen zweiteiligen Steckkupplungen durch einseitigen Zugang installieren. In weiterer bevorzugter Ausgestaltung lässt sich auch die Verbindung mit dem zweiten Bauteil bei nur einseitiger Zugänglichkeit herstellen, sofern der Bolzen mit Verrastungskopf bereits im Bauteil befestigt ist.

Vorliegende Erfindung umfasst zudem ein Herstellungsverfahren für ein weibliches und ein männliches Kupplungselement gemäß einer der oben beschriebenen Ausführungsformen. Dieses Herstellungsverfahren weist die folgenden Schritte auf: Bereitstellen einer Spritzgussform mit den negativen geometrischen Merkmalen des weiblichen oder männlichen Kupplungselements, Füllen der Spritzgussform mit einem Elastomer im Spritzgussverfahren und Abkühlen der Spritzgussform und Entformen des weiblichen oder männlichen Kupplungselements aus der Spritzgussform.

### 3. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Fig. 1: eine Ansicht entgegen einer Installationsrichtung einer bevorzugten Ausführungsform des weiblichen Kupplungselements,
- Fig. 2: eine Draufsicht auf einen bevorzugten Kopfabschnitt des weiblichen Kupplungselements,
- Fig. 3: eine weitere bevorzugte Ausführungsform des weiblichen Kupplungselements in einer Ansicht entgegen der Installationsrichtung,
- Fig. 4: eine Schnittdarstellung des weiblichen Kupplungselements gemäß Fig. 1,
- Fig. 5: eine perspektivische Ansicht des weiblichen Kupplungselements gemäß Fig. 1,

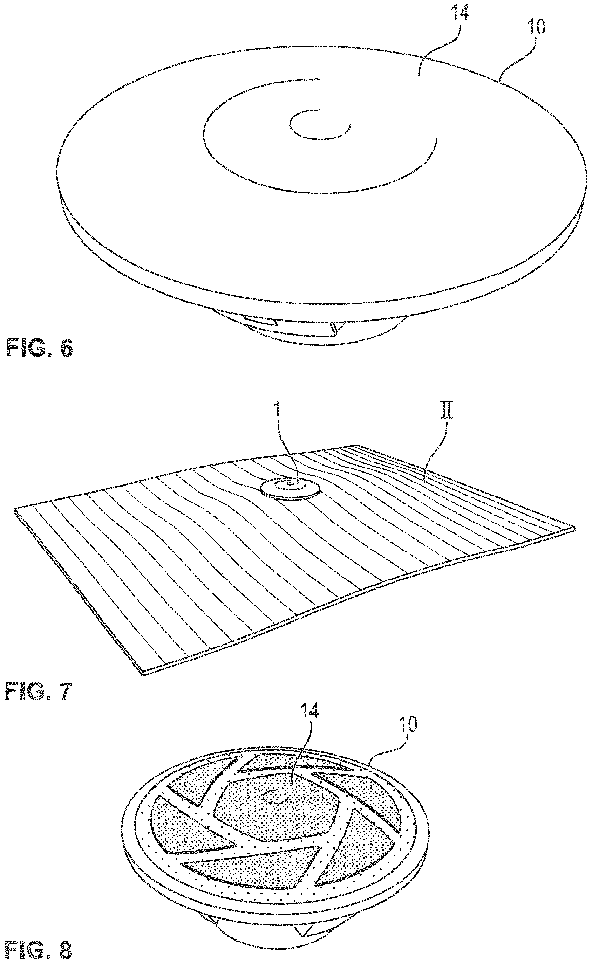

- Fig. 6: eine weitere perspektivische Ansicht des weiblichen Kupplungselements gemäß Fig. 1,
- Fig. 7: ein installiertes bevorzugtes weibliches Kupplungselement im zweiten Bauteil,
- Fig. 8: eine perspektivische Ansicht des weiblichen Kupplungselements mit einer bevorzugten Gestaltung des Kopfabschnitts,

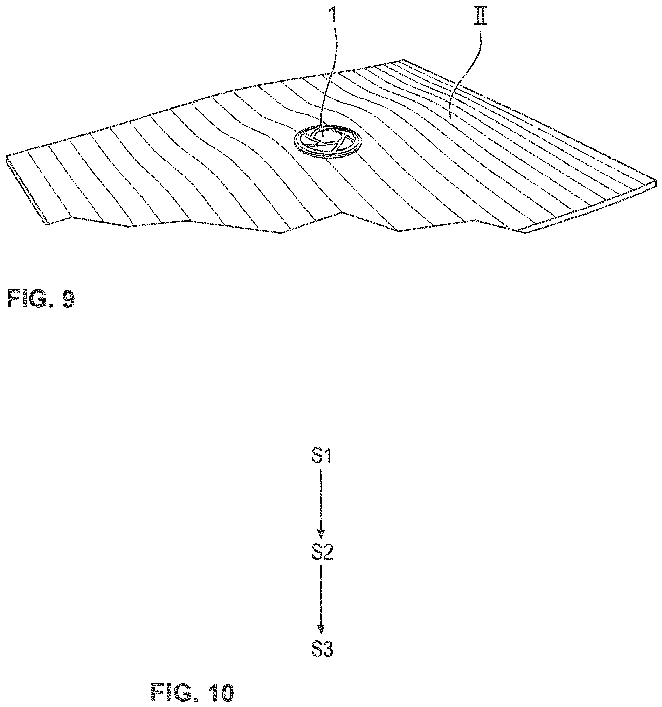

- Fig. 9: ein installiertes bevorzugtes weibliches Kupplungselement in einem zweiten Bauteil mit einer Gestaltung des Kopfabschnitts und
- Fig. 10: ein Flussdiagramm eines bevorzugten Verbindungsverfahrens von zwei Bauteilen mithilfe einer zweiteiligen Steckkupplung.
- Fig. 11: eine teilweise Schnittdarstellung einer bevorzugten Ausführungsform eines männlichen Kupplungselements

### 4. Detaillierte Beschreibung der bevorzugten Ausführungsformen

Gemäß vorliegender Erfindung werden zwei Bauteile I, II mit einer zweiteiligen Steckkupplung verbunden, die ein weibliches Kupplungselement 1 und ein männliches Bolzenelement M umfasst. Das männliche Bolzenelement M besteht aus Bolzen B, der an einem Ende einen Verrastungskopf V an einem anderen Ende eine Befestigungsstruktur S (nicht gezeigt) aufweist. Der Verrastungskopf V ist vorzugsweise ein Kugelkopf oder eine andere verdickte Struktur bezogen auf einen Querschnitt des Bolzens B. Die Befestigungsstruktur S besteht bevorzugt aus einem Gewinde, einem Klebeende, einer Nietstruktur oder ähnlichem, um den Bolzen B im oder am ersten Bauteil I zu befestigen. Gewöhnlich wird die Befestigungsstruktur S bzw. der Bolzen B in einer Bauteilöffnung des Bauteils I angeordnet. Sofern die Bauteilöffnung des Bauteils I eine runde Form und der Bolzen B bzw. die Befestigungsstruktur S eine dazu passende Außenkontur aufweist, sorgt vorzugsweise ein Presssitz zwischen Bauteil I und Bolzen B für eine Verdrehsicherung zwischen Bauteil I und Bolzen B. Diese Verdrehsicherung ist bevorzugt auch mit Hilfe einer asymmetrischen oder unrunden Form der Bauteilöffnung des Bauteils I realisierbar. In gleicher Weise ist als asymmetrische Form eine runde Öffnung in Kombination mit einer radialen Nut zur Aufnahme eines Biockierenden Radialstegs nutzbar. In Abstimmung mit der Form der Bauteilöffnung weißt der Bolzen B an seiner Befestigungsstruktur S eine zumindest in der Außenkontur an die Bauteilöffnung angepasste Form auf. Dies gewährleistet, dass neben einem möglichen Presssitz zwischen Bauteil I und Bolzen B auch die Verdrehsicherung ein axiales Verdrehen des Bolzens B gegenüber dem Bauteil I verhindert.

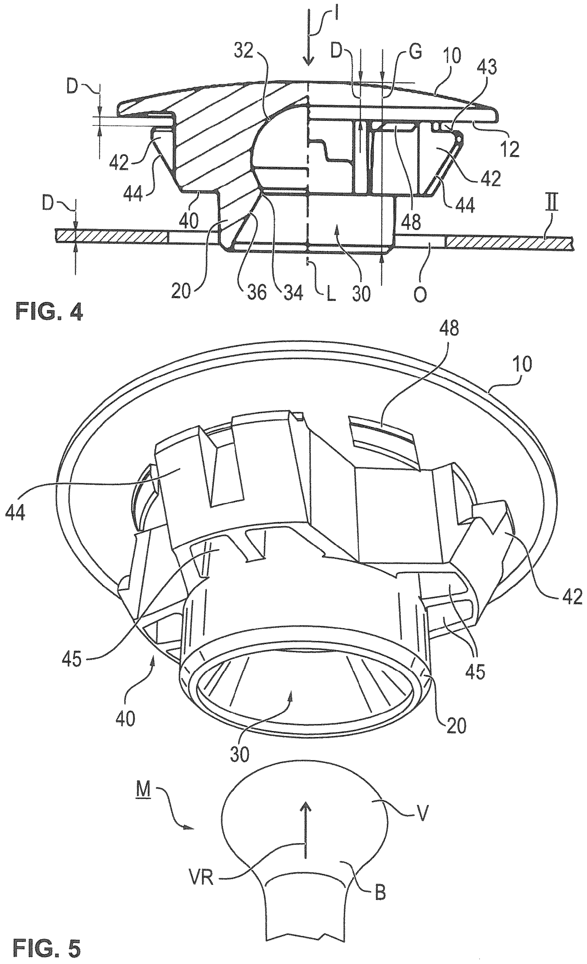

Das zweite Bauteil II umfasst eine Bauteilöffnung O (siehe Fig. 4). Das weibliche Kupplungselement 1 wird in der Bauteilöffnung O verriegelnd befestigt. Vorzugsweise weist die Bauteilöffnung O eine Form auf, die ein Verdrehen des weiblichen Kupplungselements 1 relativ zum Bauteil II verhindert. Derartige Formen sind vorzugsweise unrund, wie beispielsweise elliptisch, zitronenförmig, polygonal, wie ein Sechs-, Sieben- oder Achteck, oder asymmetrisch. Um das weibliche Kupplungselement 1 in der Bauteilöffnung O verriegelnd in axialer Richtung und bevorzugt auch geschützt gegen Verdrehen relativ zum Bauteil zu befestigen, II ist das weibliche Kupplungselement 1 in einem konstruktiven Bereich, der in die Bauteilöffnung O eingreift, an die Gestalt der Bauteilöffnung O angepasst. Die äußere Querschnittsform der Außenseite 40 des weiblichen Kupplungselement 1 ist somit bevorzugt an die Form der Bauteilöffnung O angepasst. Diese Formgebung gewährleistet, dass sich die Außenseite 40 nach Installation in der Bauteilöffnung O am Rand der Bauteilöffnung O abstützen kann.

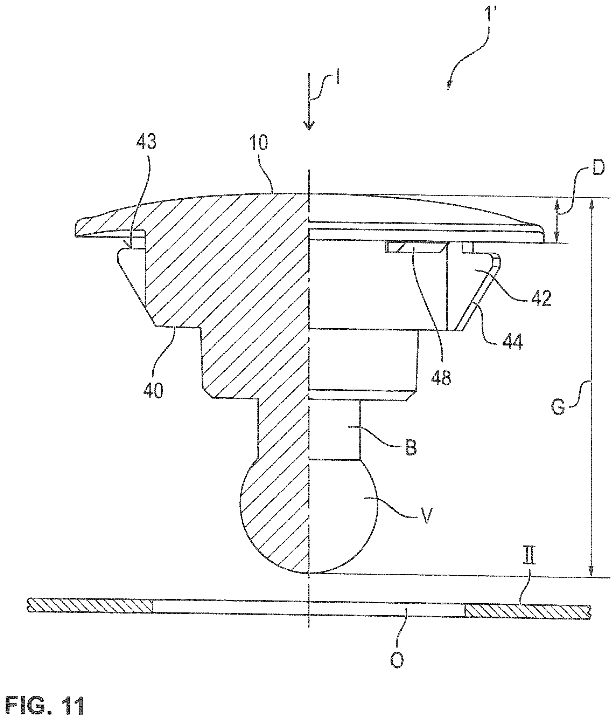

Vorliegende Erfindung umfasst ebenfalls ein männliches Kupplungselement 1', das in gleicher Weise und basierend auf der gleichen konstruktiven Ausgestaltung wie das weibliche Kupplungselement 1 in der Bauteilöffnung O befestigt ist und in ein weibliches Aufnahmeelement einsetzbar ist (siehe Fig. 11). Daher gelten die für das weibliche Kupplungselement 1 im Weiteren beschriebenen Ausgestaltungen in gleicher Weise für das männliche Kupplungsteil 1'. Ein Unterschied besteht lediglich in der männlichen zylinderartigen Verbindungsstruktur 20' im Vergleich zur weiblichen hohlzylinderähnlichen Verbindungsstruktur 20. Die männliche Verbindungsstruktur 20' ist bolzenähnlich ausgebildet mit einem verdickten axialen Verrastungsende V, wie bevorzugt ein Kugelkopf oder dergleichen.

Es ist ebenfalls bevorzugt, das erste I und das zweite Bauteil II jeweils mit einer Bauteilöffnung O vorzusehen. Auf dieser konstruktiven Grundlage wird ein weibliches oder männliches Kupplungselement 1; 1' in der Bauteilöffnung O des ersten Bauteils I und ein männliches oder weibliches Kupplungselement 1'; 1 in der Bauteilöffnung O des zweiten Bauteils II angeordnet. Nachfolgend wird eine Verbindung zwischen den Bauteilen I, II über die zueinander komplementären Kupplungselemente 1, 1' hergestellt, indem das männliche Kupplungselement 1' im weiblichen Kupplungselement 1 verriegeln, aber vorzugsweise lösbar befestigt wird.

Während das erste Bauteil I häufig ein stabiles Strukturbauteil, wie ein Karosserieteil, ein Motor- oder Getriebeblock oder ein anderes tragendes Teil, ist, wird mit dem zweiten Bauteil II bevorzugt eine Abdeckung, eine Verkleidung oder dergleichen beschrieben. Das zweite Bauteil II besteht bevorzugt aus Kunststoff, faserverstärktem Kunststoff, Blech, einer Fasermatte, Karbon oder Ähnlichem.

Das weibliche und das männliche Kupplungselement 1, 1' umfassen einen flächigen Kopfabschnitt 10. Vorzugsweise deckt der Kopfabschnitt 10 nach Installation des weiblichen oder männlichen Kupplungselements 1, 1' in der Bauteilöffnung O in Installationsrichtung I die Bauteilöffnung O vollständig ab. Auf diese Weise wird ein Eindringen von Fremdkörpern, wie Staub und Feuchtigkeit in die Bauteilöffnung O vermieden.

Senkrecht vom Kopfabschnitt 10 erstreckt sich beim weiblichen Kupplungselement 1 eine hohlzylinderähnliche Verbindungsstruktur 20. Die hohlzylinderähnliche Verbindungsstruktur 20 besitzt eine radiale Innenseite 30 und eine radiale Außenseite 40. Die radiale Innenseite 30 und das radiale Innere der Verbindungsstruktur 20 dienen der Aufnahme und Verrastung des Bolzens B mit Verrastungskopf V (siehe Fig. 5). Daher umfasst die radiale Innenseite 30 bevorzugt eine Kugelpfanne 32 oder eine ähnliche Struktur zur Aufnahme des Verrastungskopfes V. Unterhalb der Kugelpfanne 32 befindet sich ein radial einwärts ragender Verriegelungssteg 34. Dieser ist umfänglich umlaufend oder mit Durchbrüchen ausgebildet. Dieser Verriegelungssteg 34 wird beim Einsetzen des Bolzens B mit Verrastungskopf V radial auswärts gedrückt, sodass der Verrastungskopf V in die Kugelpfanne 32 einschnappen kann. Danach federt der Verriegelungssteg 34 radial einwärts und verriegelt das männliche Kupplungselement B, V im Inneren der hohlzylinderähnlichen Verbindungsstruktur 20. Eine trichterförmige Einführöffnung 36 dient dem erleichterten Einsetzen des Bolzens B in die Verbindungsstruktur 20. Im Vergleich dazu weist die männliche zylinderähnliche Verbindungsstruktur 20' keine radiale Innenseite 30 auf (siehe Fig. 11). Die radiale Außenseite 40 der männlichen zylinderähnlichen Verbindungsstruktur 20' ist in gleicher Weise gestaltet.

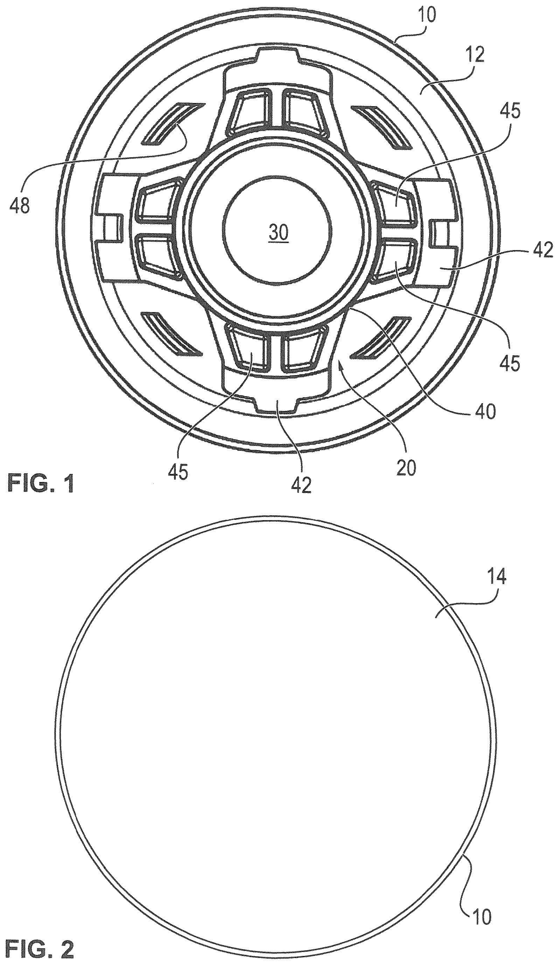

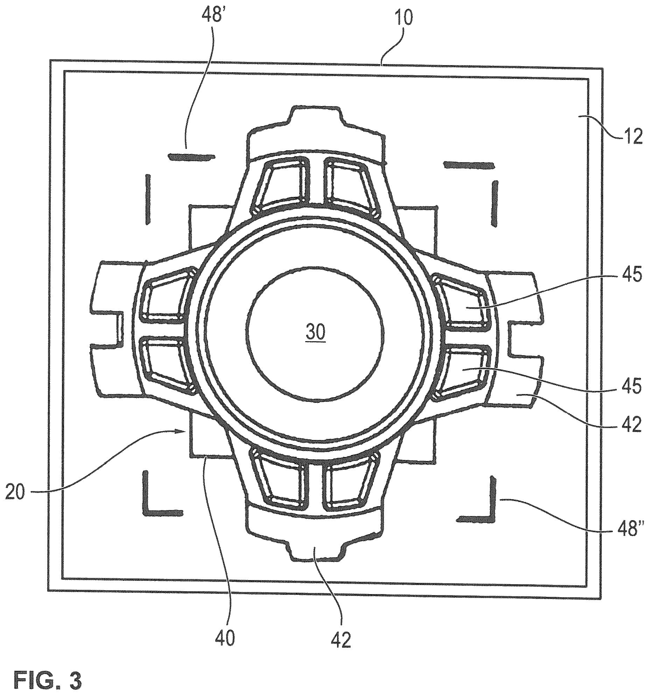

Während die Innenseite 30 bevorzugt einen kreisförmigen Querschnitt aufweist, ist die Außenseite 40 der Verbindungsstruktur 20 im Querschnitt bevorzugt kreisförmig (Fig. 1) oder eckig (Fig. 3) ausgebildet. Die äußere Querschnittsform der Außenseite 40 ist bevorzugt an die Form der Bauteilöffnung O angepasst. Diese Formgebung gewährleistet, dass sich die Außenseite 40 nach Installation in der Bauteilöffnung O am Rand der Bauteilöffnung O abstützen kann. Dies unterstützt den Halt des weiblichen und männlichen Kupplungselements 1, 1' im zweiten Bauteil II.

Fig. 3 zeigt eine Ausführungsform der Außenseite 40, die radial einwärts versetzt ist und sich daher nicht an den Rändern der Bauteilöffnung O abstützt. Die zusätzliche Abstützung wird durch Radialstege 48', 48" realisiert (siehe unten). Diese greifen bevorzugt am seitlichen Rand der Bauteilöffnung O (siehe 48') und/oder in einem Eckbereich der Bauteilöffnung O (siehe 48") an. Die gleiche Ausgestaltung wird bevorzugt auch im männlichen Kupplungselement 1' realisiert.

Unterschiedliche bevorzugte Ausführungsformen des weiblichen Kupplungselements 1 sind in den Fig. 1 und 3 in einer Ansicht von unten dargestellt. Die Verbindungsstruktur 20 der Fig. 1 hat eine im Querschnitt kreisförmige Außenseite 40. Die Verbindungsstruktur 20 der Fig. 3 hat eine im Querschnitt eckige, insbesondere viereckige, Außenseite 40.

Entsprechend der Form der Bauteilöffnung O ist auch die Form des Kopfabschnitts 10 an die Form der Bauteilöffnung O anpassbar oder frei wählbar. Daher ist es ebenfalls bevorzugt, eine im Querschnitt kreisförmige Außenseite 40 mit einem eckigen Kopfabschnitt 10 zu kombinieren.

Zur Befestigung des weiblichen und des männlichen Kupplungselements 1, 1' in der Bauteilöffnung O weist die Außenseite 40 eine integral ausgebildete Verriegelungsstruktur 42, 48 auf. Vorzugsweise um eine Bauteildicke D des zweiten Bauteils II beabstandet von einer Unterseite 12 des Kopfabschnitts 10 ist ein umlaufender oder eine Mehrzahl von gleichmäßig angeordneten radial auswärts ragenden federnden Raststegen 42 vorgesehen. Die Raststege 42 besitzen bevorzugt eine der Unterseite 12 des Kopfabschnitts 10 zugewandte Haltefläche 43. Diese verläuft vorzugsweise senkrecht zur Längsachse des weiblichen Kupplungselements 1. Zwischen der Haltefläche 43 und der Kopfunterseite 12 ist auf diese Weise ein Installationsspalt definiert, in den das zweite Bauteil II aufgenommen wird. Für einen bevorzugten Presssitz des Bauteils II im Installationsspalt ist dieser bevorzugt schmaler ausgebildet, als das Bauteil II dick ist. Dies wird gewährleistet durch einen fest anliegenden und bevorzugt abdichtenden Sitz der Unterseite 12 auf dem Bauteil II.

Um die Verbindungsstruktur 20 möglichst passgenau in die Bauteilöffnung O einsetzen zu können, ist die Verbindungsstruktur 20, 20' bevorzugt nur geringfügig kleiner als die Ausdehnung der Bauteilöffnung O dimensioniert. Einlaufschrägen 44 unterstützen das Einstecken des weiblichen und des männlichen Kupplungselements 1, 1' in die Bauteilöffnung O. Durch das Abstützen der Einlaufschrägen 44 am Rand der Bauteilöffnung O während des Einsteckens werden die Raststege 42 bevorzugt radial einwärts verformt. Dies ermöglicht, dass die Raststege 42 die Bauteilöffnung O durchlaufen und das zweite Bauteil II zwischen den Halteflächen 43 und der Unterseite 12 des Kopfabschnitts 10 verriegelt wird.

Die Verformung der Raststege 42 wird durch die Herstellung des weiblichen und des männlichen Kupplungselements 1, 1' aus einem elastischen Material, bevorzugt ein Elastomer, gewährleistet. Diese Verformung wird gemäß vorliegender Erfindung durch Vorsehen von mindestens einem Hohlraum 45 in jedem Raststeg 42 unterstützt. Um die Stabilität der Raststege 42 weiterhin zu gewährleisten, sind bevorzugt zwei benachbarte Hohlräume 45 in einem Raststeg durch eine Zwischenwand 46 voneinander getrennt.

Um zusätzlich das weibliche und das männliche Kupplungselement 1, 1' in der Bauteilöffnung O zu befestigen, ist eine Mehrzahl von Radialstegen 48, 48', 48" an der Unterseite 12 des Kopfabschnitts 10 vorgesehen. Die Radialstege 48, 48', 48" erstrecken sich parallel zur Längsachse L und weisen bevorzugt eine Schräge 49 auf. Die Schräge 49 ist an der radialen Außenseite des Radialstegs 48 angeordnet und läuft in Installationsrichtung I radial einwärts zu.

Beim Einsetzen des weiblichen und des männlichen Kupplungselements 1, 1' in die Bauteilöffnung O greifen die Radialstege 48, 48', 48" in die Bauteilöffnung O in axialer Richtung ein. Nach dem Eingreifen bilden die Radialstege 48, 48', 48" bevorzugt einen Hinterschnitt gegen ein radiales oder seitliches Versetzen des weiblichen oder männlichen Kupplungselements 1, 1' innerhalb der Bauteilöffnung O.

Bevorzugt weist das weibliche und das männliche Kupplungselement 1, 1' eine axiale Gesamtlänge G auf (siehe Fig. 4 und 11). Aufgrund der erfindungsgemäß bevorzugten Ausgestaltung des Kopfabschnitts 10 weist dieser eine axiale Dicke D, also einen maximalen Überstand über der Oberfläche des zweiten Bauteils II, im Bereich von 5 bis 25 %, vorzugsweise 5 bis 15 %, der axialen Gesamtlänge G des weiblichen Kupplungselements 1 auf. Durch diese Positionierung des Kopfabschnitts 10 passt sich dieser an die Oberfläche des zweiten Bauteils II an und blockiert nicht Bauraum oberhalb des zweiten Bauteils II.

Vorzugsweise wird eine Oberseite 14 des Kopfabschnitts 10 farblich gestaltet, strukturiert, haptisch gestaltet, bedruckt und/oder mit Inlays versehen.

Zur Installation des weiblichen und des männlichen Kupplungselements 1, 1' wird dieses in Installationsrichtung I in die Bauteilöffnung O des zweiten Bauteils II und/oder des ersten Bauteils I eingesteckt (Schritt S1). Die hohlzylinderähnliche oder die zylinderähnliche Verbindungsstruktur 20, 20' wird in Installationsrichtung I soweit in die Bauteilöffnung O bewegt, bis sich die Raststege 42 in der Bauteilöffnung O verrasten (Schritt S2). Gleichzeitig stützt sich bevorzugt die Unterseite 12 des Kopfabschnitts 10 am zweiten Bauteil II ab. Für diese Installation ist eine einseitige Zugänglichkeit des zweiten Bauteils II ausreichend.

Um das weibliche Kupplungselement 1 mit dem am ersten Bauteil I befestigten Bolzen B mit Verrastungskopf V zu befestigen bzw. zu verriegeln, wird das weibliche Kupplungselement 1 weiter in Installationsrichtung I auf den Bolzen B mit Verrastungskopf V geschoben. Entsprechendes gilt, wenn der Bolzen B durch ein männliches Kupplungsteil 1' gebildet wird. Dadurch ergibt sich eine Relativbewegung des männlichen Bolzenelements M oder des männlichen Kupplungsteils 1' bezogen auf das weibliche Kupplungselement 1 in einer Verbindungsrichtung VR entgegengesetzt zur Installationsrichtung I (Schritt S3). Auch dieses Verbinden zwischen dem ersten und zweiten Bauteil ist allein mit einseitiger Zugänglichkeit realisierbar. In analoger Weise wird das männliche Kupplungselement 1' weiter in Installationsrichtung J in das weibliche Aufnahmeelement oder in ein weibliches Kupplungsteil 1 geschoben und dort verriegelt. Es ist ebenfalls bevorzugt, das Bolzenelement M oder das männliches Kupplungselement 1' und das weibliche Aufnahmeelement oder das weibliche Kupplungselement 1 in bzw. auf das Kupplungselement 1, 1' zu bewegen und dort zu verriegeln.

### 5. Bezugszeichenliste

- I, II: Bauteile
- L: Längsachse
- M: männliches Kupplungselement
- B: Bolzen
- V: Verrastungskopf
- O: Bauteilöffnung
- I: Installationsrichtung
- VR: Verbindungsrichtung
- 1: weibliches Kupplungselement
- 10: Kopfabschnitt
- 12: Unterseite
- 14: Oberseite
- 20: Verbindungsstruktur
- 30: Innenseite
- 32: Kugelpfanne
- 34: Verrastungssteg
- 36: Einführschräge
- 40: Außenseite
- 42: Raststeg
- 43: Haltefläche
- 44: Einlaufschräge
- 45: Hohlraum
- 46: Zwischenwand
- 48: Radialsteg
- 49: Schräge

## Patentansprüche

1. Ein weibliches Kupplungselement (1) einer zweiteiligen Steckkupplung, das die folgenden Merkmale aufweist:
a. einen flächigen Kopfabschnitt (10), von dem sich senkrecht in einer Installationsrichtung (I) des weiblichen Kupplungselements (1)
b. eine weibliche hohlzylinderähnliche Verbindungsstruktur (20) erstreckt, die an einer radialen Innenseite (30) einen radial einwärts ragenden Verriegelungssteg umfasst, sodass ein männliches Bolzenelement, insbesondere ein Kugelbolzen, in die weibliche hohlzylinderähnliche Verbindungsstruktur (20) entgegen der Installationsrichtung (I) einführbar und dort verriegelbar ist, wobei
c. das weibliche Kupplungselement (1) an einer radialen Außenseite (40) der weiblichen hohlzylinderähnlichen Verbindungsstruktur (20) eine integrale Verriegelungsstruktur mit einem umlaufenden oder einer Mehrzahl von gleichmäßig angeordneten auswärts ragenden federnden Raststegen (42) aufweist, die mit dem Kopfabschnitt (10) einen Installationsspalt zur Aufnahme des Bauteils (II) bilden, sodass das weibliche Kupplungselement (1) in der Öffnung (O) des Bauteils (II) mit einer Relativbewegung zwischen weiblichem Kupplungsteil (1) und Bauteil (II) in Installationsrichtung einrastbar ist, während
d. der umlaufende oder die Mehrzahl von Raststegen (42) einen inneren Hohlraum (45) aufweisen, sodass die Raststege (42) radial einwärts verformbar sind, **dadurch gekennzeichnet, dass**
e. eine Mehrzahl von Radialstegen (48, 48', 48") an einer Unterseite des Kopfabschnitts (10) vorgesehen ist, die sich parallel zu einer Längsachse des Kupplungselements erstrecken.

2. Ein männliches Kupplungselement (1') einer zweiteiligen Steckkupplung, das die folgenden Merkmale aufweist:
a. einen flächigen Kopfabschnitt (10), von dem sich senkrecht in einer Installationsrichtung (I) des männlichen Kupplungselements (1')
b. eine männliche zylinderähnliche Verbindungsstruktur (20', B, V) erstreckt, die einen sich axial erstreckenden Bolzen (B) mit einem Verrastungskopf (V) umfasst, so dass die männliche zylinderähnliche Verbindungsstruktur (20', B, V) in ein weibliches Aufnahmeelement (20) einführbar und dort verriegelbar ist, wobei
c. das männliche Kupplungselement (1') an einer radialen Außenseite (40) der männlichen zylinderähnlichen Verbindungsstruktur (20') eine integrale Verriegelungsstruktur mit einem umlaufenden oder einer Mehrzahl von gleichmäßig angeordneten auswärts ragenden federnden Raststegen (42) aufweist, die mit dem Kopfabschnitt (10) einen Installationsspalt zur Aufnahme des Bauteils (II) bilden, sodass das männliche Kupplungselement (1') in der Öffnung (O) des Bauteils (II) mit einer Relativbewegung zwischen männlichem Kupplungsteil (1') und Bauteil (II) in Installationsrichtung einrastbar ist, **dadurch gekennzeichnet, dass**
d. der umlaufende oder die Mehrzahl von Raststegen (42) einen inneren Hohlraum (45) aufweisen, sodass die Raststege (42) radial einwärts verformbar sind, und
e. eine Mehrzahl von Radialstegen (48, 48', 48") an einer Unterseite des Kopfabschnitts (10) vorgesehen ist, die sich parallel zu einer Längsachse des Kupplungselements erstrecken..

3. Kupplungselement (1; 1') gemäß einem der vorhergehenden Ansprüche, in dem der umlaufende oder die Mehrzahl von Raststegen (42) gegenüber dem Kopfabschnitt (10) verlaufende Halteflächen (43) definieren, die den Installationsspalt begrenzen.

4. Kupplungselement (1; 1 ') gemäß einem der vorhergehenden Ansprüche, in dem der umlaufende oder die Mehrzahl von Raststegen (42) in Installationsrichtung (I) geneigt angeordnete Einlaufschrägen (44) aufweisen, sodass sich der/die Raststege (42) in Installationsrichtung verjüngen.

5. Kupplungselement (1; 1') gemäß Anspruch 1 oder 2, in dem die Verbindungsstruktur (20, 20') in Anpassung an eine Form der Öffnung (O) im Bauteil (II) eine runde oder eine eckige Außenkontur aufweist.

6. Kupplungselement (1; 1') gemäß einem der vorhergehenden Ansprüche, in dem sich der Kopfabschnitt (10) in radialer Richtung bezogen auf eine axiale Längsachse (L) des Kupplungsteils (1) über eine radiale oder laterale Ausdehnung des/der Raststege (42) erstreckt.

7. Kupplungselement (1; 1') gemäß einem der vorhergehenden Ansprüche, in dem der Kopfabschnitt (10) eine geschlossene Fläche entgegengesetzt zur Installationsrichtung (I) bereitstellt, die eine runde oder eine eckige Form aufweist.

8. Kupplungselement (1; 1') gemäß einem der vorhergehenden Ansprüche, in dem der Kopfabschnitt (10) eine axiale Dicke angrenzend an den Installationsspalt und entgegengesetzt zur Installationsrichtung (I) im Bereich von 5 bis 25 % einer axialen Gesamtlänge des Kupplungselements (1) aufweist.

9. Kupplungselement (1) gemäß Anspruch 1 in Kombination mit einem der vorhergehenden Ansprüche 3 bis 8, in dem die radiale Innenseite (30) der weiblichen hohlzylinderähnlichen Verbindungsstruktur (20) eine Kugelpfanne (32) aufweist und der Verriegelungssteg (34) umlaufend durchgängig oder mit Durchbrüchen ausgebildet ist.

10. Zweiteilige Steckkupplung, die
ein männliches Bolzenelement mit einem Verrastungskopf, insbesondere einen Bolzen mit Kugelkopf, in Kombination mit einem weiblichen Kupplungselement (1) mit einer weiblichen hohlzylinderähnlichen Verbindungsstruktur (20) gemäß einem der vorhergehenden Ansprüche 1 oder 3 bis 9 aufweist oder
die ein weibliches Aufnahmeelement in Kombination mit einem männlichen Kupplungselement (1') mit einer männlichen zylinderähnlichen Verbindungsstruktur (20) gemäß einem der vorhergehenden Ansprüche 2 bis 9 aufweist oder
die ein weibliches Kupplungselement (1) mit einer weiblichen hohlzylinderähnlichen Verbindungsstruktur (20) gemäß einem der vorhergehenden Ansprüche 1 oder 3 bis 9 in Kombination mit einem männlichen Kupplungselement (1') mit einer männlichen zylinderähnlichen Verbindungsstruktur (20) gemäß einem der vorhergehenden Ansprüche 2 bis 9 aufweist.

11. Verbindung zwischen einem ersten Bauteil (I) und einem zweiten Bauteil (II) über eine zweiteilige Steckkupplung, in der
das erste Bauteil (I) mit einem männlichen Bolzenelement (M) mit einem Verrastungskopf (V) ausgestattet ist und das zweite Bauteil (II) ein in einer Bauteilöffnung (O) installiertes weibliches Kupplungselement (I) gemäß einem der Ansprüche 1 oder 3 bis 9 aufweist oder in der
das erste Bauteil (I) mit einem weiblichen Aufnahmeelement ausgestattet ist und das zweite Bauteil (II) ein in einer Bauteilöffnung (O) installiertes männliches Kupplungselement (1') gemäß einem der Ansprüche 2 bis 9 aufweist oder in der
das erste Bauteil (I) ein in einer Bauteilöffnung (O) installiertes weibliches Kupplungselement (1) und das zweite Bauteil (II) ein in einer Bauteilöffnung (O) installiertes männliches Kupplungselement (1') gemäß einem der Ansprüche 1 bis 9 aufweist.

12. Verbindungsverfahren zwischen einem ersten Bauteil (I) mit einem männlichen Bolzenelement oder einem weiblichen Aufnahmeelement und einem zweiten Bauteil (II) mit einer Bauteilöffnung (O), das die folgenden Schritte aufweist:
a. Einstecken eines weiblichen Kupplungselements (1) gemäß einem der Patentansprüche 1 oder 3 bis 9 oder eines männlichen Kupplungselements (1') gemäß einem der Patentansprüche 2 bis 9 in die Bauteilöffnung (O) des zweiten Bauteils (II) in einer Installationsrichtung (I), sodass sich ein Kopfabschnitt (10) des weiblichen (1) oder männlichen Kupplungselements (1') an einer Oberfläche des zweiten Bauteils (II) abstützt und eine in Installationsrichtung (I) hohlzylinderähnliche oder zylinderähnliche Verbindungsstruktur (20, 20') die Bauteilöffnung (O) durchgreift und
b. Verrasten des weiblichen (1) oder männlichen Kupplungselements (1') über einen Installationsspalt einer integralen Verriegelungsstruktur (40) des weiblichen (1) oder männlichen Kupplungselements (1') am zweiten Bauteil (II), wobei die Verriegelungsstruktur (40) an einer radialen Außenseite der Verbindungsstruktur (20, 20') ausgebildet ist,
c1. Verriegeln eines Kopfes des Bolzenelements an einem radial einwärts ragenden Verrastungssteg (34) im Inneren (30) der hohlzylinderähnlichen Verbindungsstruktur (20) über eine Relativbewegung des männlichen Kupplungselements bezogen auf das weibliche Kupplungselement (1) in einer Verbindungsrichtung (VR) entgegengesetzt zur Installationsrichtung (I) oder
c2. Verriegeln eines weiblichen Aufnahmeelements an dem axial vorstehenden Verrastungskopf (V) der zylinderähnlichen Verbindungsstruktur (20') über eine Relativbewegung (J) des Aufnahmeelements bezogen auf das männliche Kupplungselement in einer Verbindungsrichtung (VR) entgegengesetzt zur Installationsrichtung (J).

13. Verbindungsverfahren gemäß Anspruch 12, mit dem weiteren Schritt:
Anordnen eines männlichen Kupplungselements (1') gemäß einem der Patentansprüche 2 bis 9 in einer Bauteilöffnung (O) des ersten Bauteils (I) als männliches Bolzenelement oder
Anordnen eines weiblichen Kupplungselements (1) gemäß einem der Patentansprüche 1 oder 3 bis 9 in einer Bauteilöffnung (O) des ersten Bauteils (I) als weibliches Aufnahmeelement.

14. Verbindungsverfahren gemäß Anspruch 12 oder 13 mit dem Schritt:
radial einwärts gerichtetes Verformen von einem umlaufenden oder einer Mehrzahl von federnden Raststegen (42) an einer radialen Außenseite der Verbindungsstruktur (20, 20') durch das erste und/oder zweite Bauteil (II) und
Aufnehmen eines Rands der Bauteilöffnung (O) in einem Installationsspalt zwischen Raststeg (42) und Kopfabschnitt (10).

15. Verbindungsverfahren gemäß Anspruch 12, 13 oder 14, in dem das weibliche oder männliche Kupplungselement (1; 1') allein über eine einseitige Zugänglichkeit:
am zweiten Bauteil (II) befestigt und
mit dem männlichen Bolzenelement oder Kupplungselement (1') oder mit dem weiblichen Aufnahmeelement oder Kupplungselement (1) verbunden wird.

16. Herstellungsverfahren für ein weibliches (1) oder männliches Kupplungselement (1') gemäß einem der Ansprüche 1 bis 9 mit den folgenden Schritten:
a. Bereitstellen einer Spritzgussform mit den negativen geometrischen Merkmalen des weiblichen oder männlichen Kupplungselements (1; 1'),
b. Füllen der Spritzgussform mit einem Elastomer im Spritzgussverfahren und
c. Abkühlen der Spritzgussform und Entformen des weiblichen oder männlichen Kupplungselements (1; 1') aus der Spritzgussform.

## Claims

1. A female coupling element (1) of a two-part plug-in coupling, which has the following features:
a. a planar head section (10) from which, perpendicularly in an installation direction (I) of the female coupling element (1),
b. a female hollow-cylinder-like connection structure (20) extends having a radially inwardly projecting locking web on a radial inner side (30), so that a male bolt element, in particular a ball bolt, is insertable into the female hollow-cylinder-like connection structure (20) against the installation direction (I) and is lockable there, wherein
c. the female coupling element (1) has an integral locking structure with a circumferential or a plurality of uniformly arranged outwardly projecting springy latching webs (42) on an outer radial side (40) of the female hollow cylinder-like connection structure (20), which form an installation gap with the head section (10) for receiving the component (II), so that the female coupling element (1) is latchable in the opening (O) of the component (II) with a relative movement between the female coupling part (1) and component (II) in installation direction, while
d. the circumferential or the plurality of latching webs (42) include an inner hollow space (45) so that the latching webs (42) are deformable radially inwardly, **characterized in that**
e. a plurality of radial webs (48, 48', 48") is provided on a bottom side of the head section (10) which extend parallel to a longitudinal axis of the coupling element.

2. A male coupling element (1') of a two-part plug-in coupling, which has the following features:
a. a planar head section (10) from which, perpendicularly in an installation direction (I) of the male coupling element (1'),
b. a male cylinder-like connection structure (20', B, V) extends, which comprises an axially extending bolt (B) with a latching head (V), so that the male cylinder-like connection structure (20', B, V) is insertable into a female receiving element (20) and lockable there, wherein
c. the male coupling element (1') has an integral locking structure with a circumferential or a plurality of uniformly arranged outwardly projecting springy latching webs (42) on a radial outer side (40) of the male cylinder-like connection structure (20'), which form an installation gap with the head section (10) for receiving the component (II), so that the male coupling element (1') is latchable in the opening (O) of the component (II) with a relative movement between the male coupling part (1') and component (II) in installation direction, **characterized in that**
d. the circumferential or the plurality of latching webs (42) include an inner hollow space (45) so that the latching webs (42) are deformable radially inwardly, and
e. a plurality of radial webs (48, 48', 48") is provided at a bottom side of the head section (10) which extend parallel to a longitudinal axis of the coupling element.

3. Coupling element (1; 1') according to one of the preceding claims, in which the circumferential or the plurality of latching webs (42) define support surfaces (43) extending opposite to the head section (10), which limit the installation gap.

4. Coupling element (1; 1') according to one of the preceding claims, in which the circumferential or the plurality of latching webs (42) comprise inlet bevels (44) inclined in installation direction (I), so that the latching web or webs (42) taper in the installation direction.

5. Coupling element (1; 1') according to claim 1 or 2, in which the connection structure (20, 20') has a round or an angular outer contour in adaptation to a shape of the opening (O) in the component (II).

6. Coupling element (1; 1') according to one of the preceding claims, in which the head section (10) extends in radial direction with respect to an axial longitudinal axis (L) of the coupling part (1) beyond a radial or lateral extent of the latching web or webs (42).

7. Coupling element (1; 1') according to one of the preceding claims, in which the head section (10) provides a closed face opposite to the installation direction (I), which has a round or angular shape.

8. Coupling element (1; 1') according to one of the preceding claims, in which the head section (10) has an axial thickness adjacent to the installation gap and opposite to the installation direction (I) in the range of 5 % to 25 % of an axial total length of the coupling element (1).

9. Coupling element (1) according to claim 1 in combination with one of the preceding claims 3 to 8, in which the radial inner side (30) of the female hollow-cylinder-like connection structure (20) has a ball socket (32) and the latching web (34) is formed circumferentially continuous or with cut-outs.

10. Two-part plug-in coupling, which comprises
a male bolt element with a latching head, in particular a bolt with a ball head, in combination with a female coupling element (1) with a female hollow-cylinder-like connection structure (20) according to one of the preceding claims 1 or 3 to 9 or
a female receiving element in combination with a male coupling element (1') having a male cylinder-like connection structure (20) according to one of the preceding claims 2 to 9 or
a female coupling element (1) having a female hollow-cylinder-shaped connection structure (20) according to one of the preceding claims 1 or 3 to 9 in combination with a male coupling element (1') having a male cylinder-like connection structure (20) according to one of the preceding claims 2 to 9.

11. Connection between a first component (I) and a second component (II) via a two-part plug-in coupling, in which
the first component (I) is equipped with a male bolt element (M) with a latching head (V) and the second component (II) comprises a female coupling element (I) according to one of claims 1 or 3 to 9 installed in a component opening (O) or in which
the first component (I) is equipped with a female receiving element and the second component (II) comprises a male coupling element (1') according to one of the claims 2 to 9 installed in a component opening (O) or in which
the first component (I) comprises a female coupling element (1) installed in a component opening (O) and the second component (II) comprises a male coupling element (1') according to one of claims 1 to 9 installed in a component opening (O).

12. Connection method between a first component (I) with a male bolt element or a female receiving element and a second component (II) with a component opening comprising the following steps:
a. plugging a female coupling element (1) according to one of the claims 1 or 3 to 9 or a male coupling element (1') according to one of the claims 2 to 9 into the component opening (O) of the second component (II) in an installation direction (I), so that a head section (10) of the female (1) or male coupling element (1') rests against a surface of the second component (II) and a connection structure (20, 20') which is hollow-cylinder-like or cylinder-like in installation direction reaches through the component opening and
b. latching the female (1) or male coupling element (1') over an installation gap of an integral locking structure (40) of the female (1) or male coupling element (1') on the second component (II), wherein the locking structure (40) is formed on a radial outer side of the connection structure (20, 20'),
c1. locking a head of the bolt element on a radially inwardly projecting latching web (34) in the interior (30) of the hollow-cylinder-like connection structure (20) by means of a relative movement of the male coupling element with respect to the female coupling element (1) in a connection direction (VR) opposite to the installation direction (I) or
c2. locking a female receiving element on the axially projecting latching head (V) of the cylinder-like connection structure (20') by means of a relative movement (J) of the receiving element with respect to the male coupling element in a connecting direction (VR) opposite to the installation direction (J).

13. Connection method according to claim 12, with the further step:
arranging a male coupling element (1') according to one of the claims 2 to 9 in a component opening (O) of the first component (I) as a male bolt element or
arranging a female coupling element (1) according to one of the claims 1 or 3 to 9 in a component opening (O) of the first component (I) as a female receiving element.

14. Connection method according to claim 12 or 13, comprising the step:
radially inwardly directed deforming of one circumferential or a plurality of springy latching webs (42) on a radial outer side of the connection structure (20, 20') by the first and/or second component (II) and
receiving an edge of the component opening (O) in an installation gap between latching web (42) and head section (10).

15. Connection method according to claim 12, 13 or 14, in which the female or male coupling element (1; 1') by accessibility from one side, only:
is fastened to the second component (II) and
is connected with the male bolt element or coupling element (1') or with the female receiving element or coupling element (1).

16. Manufacturing method for a female (1) or male coupling element (1') according to any one of claims 1 to 9, comprising the following steps:
a. providing an injection mold with the negative geometric features of the female or male coupling element (1, 1'),
b. filling the injection mold with an elastomer in the injection molding process and
c. cooling the injection mold and demolding the female or male coupling element (1; 1') from the injection mold.

## Revendications

1. Élément d'accouplement femelle (1) d'un accouplement emboîtable en deux parties, présentant les caractéristiques suivantes :
a. une section de tête plane (10), à partir de laquelle, perpendiculairement dans une direction d'installation (I) de l'élément d'accouplement femelle (1),
b. s'étend une structure d'assemblage femelle semblable à un cylindre creux (20), laquelle comporte une nervure de verrouillage faisant saillie radialement vers l'intérieur sur un côté intérieur radial (30), de sorte qu'un élément de goujon mâle, en particulier un goujon sphérique, peut être introduit dans la structure d'assemblage femelle semblable à un cylindre creux (20) contre la direction d'installation (I) et y être verrouillé, dans lequel
c. sur un côté extérieur radial (40) de la structure d'assemblage femelle semblable à un cylindre creux (20), l'élément d'accouplement femelle (1) présente une structure de verrouillage intégrale avec une nervure d'encliquetage périphérique ou une pluralité de nervures d'encliquetage élastiques (42) faisant saillie vers l'extérieur et disposées de façon régulière, laquelle/lesquelles forme/forment une fente d'installation avec la section de tête (10) pour la réception de la pièce (II), de sorte que l'élément d'accouplement femelle (1) peut être encliqueté dans l'ouverture (O) de la pièce (II) avec un mouvement relatif entre l'élément d'accouplement femelle (1) et la pièce (II) dans la direction d'installation, tandis que
d. la nervure d'encliquetage périphérique ou la pluralité de nervures d'encliquetage (42) présente/présentent un espace creux intérieur (45), de sorte que les nervures d'encliquetage (42) peuvent se déformer radialement vers l'intérieur, **caractérisé en ce que**
e. sur un côté inférieur de la section de tête (10), il est prévu une pluralité de nervures radiales (48, 48', 48") s'étendant parallèlement à un axe longitudinal de l'élément d'accouplement.

2. Élément d'accouplement mâle (1') d'un accouplement emboîtable en deux parties, présentant les caractéristiques suivantes :
a. une section de tête plane (10), à partir de laquelle, perpendiculairement dans une direction d'installation (I) de l'élément d'accouplement mâle (1'),
b. s'étend une structure d'assemblage mâle semblable à un cylindre (20', B, V), laquelle comporte un goujon s'étendant axialement (B) avec une tête d'encliquetage (V), de sorte que la structure d'assemblage mâle semblable à un cylindre (20', B, V) peut être introduite dans un élément de réception femelle (20) et y être verrouillée, dans lequel
c. sur un côté extérieur radial (40) de la structure d'assemblage mâle semblable à un cylindre (20'), l'élément d'accouplement mâle (1') présente une structure de verrouillage intégrale avec une nervure d'encliquetage périphérique ou une pluralité de nervures d'encliquetage élastiques (42) faisant saillie vers l'extérieur et disposées de façon régulière, laquelle/lesquelles forme/forment une fente d'installation avec la section de tête (10) pour la réception de la pièce (II), de sorte que l'élément d'accouplement mâle (1') peut être encliqueté dans l'ouverture (O) de la pièce (II) avec un mouvement relatif entre l'élément d'accouplement mâle (1') et la pièce (II) dans la direction d'installation, **caractérisé en ce que**
d. la nervure d'encliquetage périphérique ou la pluralité de nervures d'encliquetage (42) présente/présentent un espace creux intérieur (45), de sorte que les nervures d'encliquetage (42) peuvent se déformer radialement vers l'intérieur, et
e. sur un côté inférieur de la section de tête (10), il est prévu une pluralité de nervures radiales (48, 48', 48") s'étendant parallèlement à un axe longitudinal de l'élément d'accouplement.

3. Élément d'accouplement (1 ; 1') selon l'une des revendications précédentes, dans lequel la nervure d'encliquetage périphérique ou la pluralité de nervures d'encliquetage (42) définit/définissent des surfaces de maintien (43) s'étendant par rapport à la section de tête (10), lesquelles délimitent la fente d'installation.

4. Élément d'accouplement (1 ; 1') selon l'une des revendications précédentes, dans lequel la nervure d'encliquetage périphérique ou la pluralité de nervures d'encliquetage (42) présente/présentent des biseaux d'entrée (44) disposés de façon inclinée dans la direction d'installation (I), de sorte que la/les nervure(s) d'encliquetage (42) s'affine/s'affinent dans la direction d'installation.

5. Élément d'accouplement (1 ; 1') selon la revendication 1 ou 2, dans lequel la structure d'assemblage (20, 20') présente un contour extérieur rond ou anguleux adapté à une forme de l'ouverture (O) dans la pièce (II).

6. Élément d'accouplement (1 ; 1') selon l'une des revendications précédentes, dans lequel la section de tête (10) s'étend sur une extension radiale ou latérale de la/des nervure(s) d'encliquetage (42) dans une direction radiale par rapport à un axe longitudinal axial (L) de la pièce d'accouplement (1).

7. Élément d'accouplement (1 ; 1') selon l'une des revendications précédentes, dans lequel la section de tête (10) fournit une surface fermée opposée à la direction d'installation (I), laquelle présente une forme ronde ou anguleuse.

8. Élément d'accouplement (1 ; 1') selon l'une des revendications précédentes, dans lequel la section de tête (10) présente une épaisseur axiale adjacente à la fente d'installation et opposée à la direction d'installation (I), laquelle mesure entre 5% et 25% d'une longueur axiale totale de l'élément d'accouplement (1).

9. Élément d'accouplement (1) selon la revendication 1 en combinaison avec l'une des revendications précédentes 3 à 8, dans lequel le côté intérieur radial (30) de la structure d'assemblage femelle semblable à un cylindre creux (20) présente un coussinet sphérique (32) et la nervure de verrouillage (34) est formée de manière périphérique continue ou discontinue.

10. Accouplement emboîtable en deux parties, présentant
- un élément de goujon mâle avec une tête d'encliquetage, en particulier un goujon à tête sphérique, en combinaison avec un élément d'accouplement femelle (1) avec une structure d'assemblage femelle semblable à un cylindre creux (20) selon l'une des revendications précédentes 1 ou 3 à 9 ou
- présentant un élément de réception femelle en combinaison avec un élément d'accouplement mâle (1') avec une structure d'assemblage mâle semblable à un cylindre (20) selon l'une des revendications précédentes 2 à 9 ou
- présentant un élément d'accouplement femelle (1) avec une structure d'assemblage femelle semblable à un cylindre creux (20) selon l'une des revendications précédentes 1 ou 3 à 9 en combinaison avec un élément d'accouplement mâle (1') avec une structure d'assemblage mâle semblable à un cylindre (20) selon l'une des revendications précédentes 2 à 9.

11. Assemblage entre une première pièce (I) et une deuxième pièce (II) par le biais d'un accouplement emboîtable en deux parties, dans lequel
- la première pièce (I) est équipée d'un élément de goujon mâle (M) avec une tête d'encliquetage (V) et la deuxième pièce (II) présente un élément d'accouplement femelle (I) selon l'une des revendications 1 ou 3 à 9 installé dans une ouverture de pièce (O) ou dans lequel
- la première pièce (I) est équipée d'un élément de réception femelle et la deuxième pièce (II) présente un élément d'accouplement mâle (1') selon l'une des revendications 2 à 9 installé dans une ouverture de pièce (O) ou dans lequel
- la première pièce (I) présente un élément d'accouplement femelle (1) installé dans une ouverture de pièce (O) et la deuxième pièce (II) présente un élément d'accouplement mâle (1') selon l'une des revendications 1 à 9 installé dans une ouverture de pièce (O).

12. Procédé d'assemblage entre une première pièce (I) avec un élément de goujon mâle ou un élément de réception femelle et une deuxième pièce (II) avec une ouverture de pièce lequel présente les étapes suivantes :
a. introduction d'un élément d'accouplement femelle (1) selon l'une des revendications 1 ou 3 à 9 ou d'un élément d'accouplement mâle (1') selon l'une des revendications 2 à 9 dans l'ouverture de pièce (O) de la deuxième pièce (II) dans une direction d'installation (I), de telle façon qu'une section de tête (10) de l'élément d'accouplement femelle (1) ou mâle (1') s'appuie sur une surface de la deuxième pièce (II) et une structure d'assemblage semblable à un cylindre creux ou semblable à un cylindre (20, 20') traverse l'ouverture de pièce (O) dans la direction d'installation (I) et
b. encliquetage de l'élément d'accouplement femelle (1) ou mâle (1') par le biais d'une fente d'installation d'une structure de verrouillage intégrale (40) de l'élément d'accouplement femelle (1) ou mâle (1') sur la deuxième pièce (II), la structure de verrouillage (40) étant formée sur un côté extérieur radial de la structure d'assemblage (20, 20'),
c1. verrouillage d'une tête de l'élément de goujon sur une nervure d'encliquetage faisant saillie radialement vers l'intérieur (34) à l'intérieur (30) de la structure d'assemblage semblable à un cylindre creux (20) par un mouvement relatif de l'élément d'accouplement mâle par rapport à l'élément d'accouplement femelle (1) dans une direction d'assemblage (VR) opposée à la direction d'installation (I)ou
c2. verrouillage d'un élément de réception femelle sur la tête d'encliquetage faisant saillie axialement (V) de la structure d'assemblage semblable à un cylindre (20') par un mouvement relatif (J) de l'élément de réception par rapport à l'élément d'accouplement mâle dans une direction d'assemblage (VR) opposée à la direction d'installation (J).

13. Procédé d'assemblage selon la revendication 12, comprenant l'étape supplémentaire suivante :
- disposition d'un élément d'accouplement mâle (1') selon l'une des revendications 2 à 9 dans une ouverture de pièce (O) de la première pièce (I) en tant qu'élément de goujon mâle ou
- disposition d'un élément d'accouplement femelle (1) selon l'une des revendications 1 ou 3 à 9 dans une ouverture de pièce (O) de la première pièce (I) en tant qu'élément de réception femelle.

14. Procédé d'assemblage selon la revendication 12 ou 13, comprenant l'étape suivante :
- déformation orientée radialement vers l'intérieur, d'une nervure d'encliquetage périphérique ou d'une pluralité de nervures d'encliquetage élastiques (42) sur un côté extérieur radial de la structure d'assemblage (20, 20') par la première et/ou la deuxième pièce (II) et
- réception d'un bord de l'ouverture de pièce (O) dans une fente d'installation entre la nervure d'encliquetage (42) et la section de tête (10).

15. Procédé d'assemblage selon la revendication 12, 13 ou 14, dans lequel l'élément d'accouplement femelle ou mâle (1 ; 1') est, simplement du fait d'une accessibilité unilatérale :
- fixé à la deuxième pièce (II) et
- relié à l'élément de goujon ou l'élément d'accouplement mâle (1') ou à l'élément de réception ou l'élément d'accouplement femelle (1).

16. Procédé de fabrication pour un élément d'accouplement femelle (1) ou mâle (1') selon l'une des revendications 1 à 9, comprenant les étapes suivantes :
a. mise à disposition d'un moule d'injection avec les caractéristiques géométriques négatives de l'élément d'accouplement femelle ou mâle (1 ; 1'),
b. remplissage du moule d'injection avec un élastomère selon un procédé de moulage par injection et
c. refroidissement du moule d'injection et démoulage de l'élément d'accouplement femelle ou mâle (1 ; 1') hors du moule d'injection.
